# EUROPEAN PATENT APPLICATION

(11) **EP 4 557 628 A1**
(43) Date of publication of application: **21.05.2025**
(21) Application number: 23840028.7
(22) Date of filing: 17.07.2023
(51) Int. Cl.: H04B 7/06, H04B 7/0408, H04W 72/23, H04W 24/08, G06N 20/00

(54) **METHOD AND DEVICE FOR BEAM MANAGEMENT IN WIRELESS COMMUNICATION SYSTEM**

(30) Priority: 15.07.2022 KR 20220087662
(71) Applicant: LG Electronics Inc., Yeongdeungpo-gu Seoul 07336 (KR)
(72) Inventor: KANG, Jiwon, Seoul 06772 (KR); KIM, Hyungtae, Seoul 06772 (KR); PARK, Haewook, Seoul 06772 (KR); GO, Seongwon, Seoul 06772 (KR)
(74) Representative: Plasseraud IP
(86) International application number: PCT/KR2023/010217
(87) International publication number: WO 2024/014937

(57) **Abstract**

A method according to an embodiment of the present disclosure includes receiving configuration information including information related to at least one downlink reference signal (DL RS), receiving the at least one DL RS, and transmitting information related to user equipment (UE) preference determined based on measurement for the at least one DL RS. The at least one DL RS is based on a plurality of DL RSs related to at least one of i) beams of a first set and/or ii) beams of a second set related to the first set. The information related to the UE preference is related to at least one of i) a configuration of the second set and/or ii) a property related to a beam of the second set.

## Description

### [TECHNICAL FIELD]

The present disclosure relates to a method and device for beam management in a wireless communication system.

### [BACKGROUND]

A mobile communication system has been developed to provide a voice service while ensuring the activity of a user. However, the area of the mobile communication system has extended to a data service in addition to a voice. Due to the current explosive increase in traffic, there is a shortage of resources, and thus users demand a higher speed service. Accordingly, there is a need for a more advanced mobile communication system.

Requirements for a next-generation mobile communication system need to be able to support the accommodation of explosive data traffic, a dramatic increase in the data rate per user, the accommodation of a significant increase in the number of connected devices, very low end-to-end latency, and high-energy efficiency. To this end, various technologies, such as dual connectivity, massive multiple input multiple output (MIMO), in-band full duplex, non-orthogonal multiple access (NOMA), super wideband support, and device networking, are researched.

In relation to beam management, Set A and Set B are defined. Specifically, according to BM-Casel, a UE estimates/determines beams of the Set A (e.g., preferred beam(s) among the beams of the Set A) based on measurement for beams of the Set B (e.g., measurement of RSs related to the beams of the Set B).

### [DISCLOSURE]

### [TECHNICAL PROBLEM]

As described above, a UE may estimate/determine beams of Set A (based on AI/ML) based on measurement for beams of Set B. The number of beams of the Set A may be greater than the number of beams of the Set B. In this instance, configuring all beams that can be utilized/transmitted by a base station as the Set A and performing a beam report based on the Set A may be inefficient in terms of signaling overhead.

An object of the present disclosure is to determine a configuration of Set A capable of reducing signaling overhead of beam reporting performed based on the above-described BM-Case1.

When a size of Set A (e.g., the number of beams included in the Set A) to be used for beam reporting is reduced arbitrarily without any specific criteria and is used for the beam reporting, beams preferred by the UE may be excluded.

An object of the present disclosure is to reduce a reduction in reporting accuracy of beams (preferred by a UE) when determining a configuration of Set A capable of reducing signaling overhead.

The technical objects of the present disclosure are not limited to the aforementioned technical objects, and other technical objects, which are not mentioned above, will be apparently appreciated by a person having ordinary skill in the art from the following description.

### [TECHNICAL SOLUTION]

A method performed by a user equipment (UE) in a wireless communication system according to an embodiment of the present disclosure comprises receiving configuration information including information related to at least one downlink reference signal (DL RS), receiving the at least one DL RS, and transmitting information related to a UE preference determined based on a measurement for the at least one DL RS.

The at least one DL RS is based on a plurality of DL RSs related to at least one of i) beams of a first set and/or ii) beams of a second set related to the first set.

The information related to the UE preference is related to at least one of i) a configuration of the second set and/or ii) a property related to a beam of the second set.

The plurality of DL RSs may include at least one of i) first DL RSs related to the beams of the first set and/or ii) second DL RSs related to the beams of the second set.

The second DL RSs may include the first DL RSs.

The second DL RSs may be different from the first DL RSs.

A quasi co-location (QCL) relationship may be configured between the second DL RSs and the first DL RSs.

The configuration of the second set may be related to at least one of i) beams determined among pre-configured candidate beams and/or ii) a number of beams in the second set.

The property related to the beam of the second set may be related to at least one of a beam direction, an angle related to a beam, a beam width, and/or a range of the angle related to a beam.

The information related to the UE preference may be transmitted by being included in channel state information (CSI).

The CSI may include information for at least one of i) at least one second DL RS of second DL RSs related to the beams of the second set and/or ii) a beam quality value related to the at least one second DL RS.

The CSI may include information for at least one of i) at least one first DL RS of first DL RSs related to the beams of the first set and/or ii) a beam quality value related to the at least one first DL RS. The information related to the UE preference may be information for the at least one first DL RS. Based on the at least one first DL RS, i) the configuration of the second set and/or ii) the property related to the beam of the second set may be determined.

The information related to the UE preference may be transmitted based on an event.

Based on pre-transmitted information related to the UE preference being different from the information related to the UE preference, the information related to the UE preference may be transmitted.

Based on a beam quality value of a pre-reported DL RS via channel state information (CSI) being less than or equal to a certain value, the information related to the UE preference may be transmitted.

A second set for a report of channel state information (CSI) may be determined based on the information related to the UE preference.

The method may further comprise transmitting the CSI.

The CSI may include information for at least one of i) at least one second DL RS of second DL RSs related to beams of the determined second set and/or ii) a beam quality value related to the at least one second DL RS.

A size of the second set for the report of the CSI may be determined based on a max payload size related to uplink control information (UCI).

Based on an uplink control information (UCI) payload size based on the CSI being greater than a max payload size related to UCI, a part of the information for the at least one second DL RS and/or the information for the beam quality value related to the at least one second DL RS may be omitted from the CSI.

A physical uplink control channel (PUCCH) resource for transmission of the CSI may be determined based on a payload size of the CSI. The determined PUCCH resource may be one of PUCCH resources configured for each payload size.

Based on an uplink control information (UCI) payload size based on the CSI being greater than a max payload size related to UCI, a reduced second set, in which at least one beam is excluded from the beams of the determined second set, may be generated. The CSI may include information for at least one of i) one or more second DL RSs based on the reduced second set and/or ii) beam quality values related to the one or more second DL RSs.

The configuration information may include information related to a relationship between the beams of the first set and candidate beams that are able to be included in the second set.

A user equipment (UE) operating in a wireless communication system according to another embodiment of the present disclosure comprises one or more transceivers, one or more processors, and one or more memories operably connectable to the one or more processors and storing instructions that configure the one or more processors to perform operations based on being executed by the one or more processors.

The operations comprise receiving configuration information including information related to at least one downlink reference signal (DL RS), receiving the at least one DL RS, and transmitting information related to a UE preference determined based on a measurement for the at least one DL RS.

The at least one DL RS is based on a plurality of DL RSs related to at least one of i) beams of a first set and/or ii) beams of a second set related to the first set.

The information related to the UE preference is related to at least one of i) a configuration of the second set and/or ii) a property related to a beam of the second set.

A device according to another embodiment of the present disclosure comprises one or more memories, and one or more processors operably connected to the one or more memories.

The one or more memories include instructions that configure the one or more processors to perform operations based on being executed by the one or more processors.

The operations comprise receiving configuration information including information related to at least one downlink reference signal (DL RS), receiving the at least one DL RS, and transmitting information related to a user equipment (UE) preference determined based on a measurement for the at least one DL RS.

The at least one DL RS is based on a plurality of DL RSs related to at least one of i) beams of a first set and/or ii) beams of a second set related to the first set.

The information related to the UE preference is related to at least one of i) a configuration of the second set and/or ii) a property related to a beam of the second set.

One or more non-transitory computer readable mediums according to another embodiment of the present disclosure store one or more instructions.

The one or more instructions executable by one or more processors configure the one or more processors to perform operations.

The operations comprise receiving configuration information including information related to at least one downlink reference signal (DL RS), receiving the at least one DL RS, and transmitting information related to a user equipment (UE) preference determined based on a measurement for the at least one DL RS.

The at least one DL RS is based on a plurality of DL RSs related to at least one of i) beams of a first set and/or ii) beams of a second set related to the first set.

The information related to the UE preference is related to at least one of i) a configuration of the second set and/or ii) a property related to a beam of the second set.

A method performed by a base station in a wireless communication system according to another embodiment of the present disclosure comprises transmitting configuration information including information related to at least one downlink reference signal (DL RS), transmitting the at least one DL RS, and receiving information related to a user equipment (UE) preference determined based on a measurement for the at least one DL RS.

The at least one DL RS is based on a plurality of DL RSs related to at least one of i) beams of a first set and/or ii) beams of a second set related to the first set.

The information related to the UE preference is related to at least one of i) a configuration of the second set and/or ii) a property related to a beam of the second set.

A base station operating in a wireless communication system according to another embodiment of the present disclosure comprises one or more transceivers, one or more processors, and one or more memories operably connectable to the one or more processors and storing instructions that configure the one or more processors to perform operations based on being executed by the one or more processors.

The operations comprise transmitting configuration information including information related to at least one downlink reference signal (DL RS), transmitting the at least one DL RS, and receiving information related to a user equipment (UE) preference determined based on a measurement for the at least one DL RS.

The at least one DL RS is based on a plurality of DL RSs related to at least one of i) beams of a first set and/or ii) beams of a second set related to the first set.

The information related to the UE preference is related to at least one of i) a configuration of the second set and/or ii) a property related to a beam of the second set.

### [ADVANTAGEOUS EFFECTS]

According to embodiments of the present disclosure, since configuration/property of a second set (e.g., Set A) preferred by a UE is reported, the second set to be used for a beam report can be determined.

Accordingly, signaling overhead of a subsequent beam operation (beam report) can be reduced.

A reduction in accuracy of beam reporting can also be minimized compared to when a second set is determined based on any configuration/property.

Effects which may be obtained by the present disclosure are not limited to the aforementioned effects, and other technical effects not described above may be evidently understood by a person having ordinary skill in the art to which the present disclosure pertains from the following description.

### [BRIEF DESCRIPTION OF THE DRAWINGS]

FIG.1 illustrates an example of beamforming using SSB and CSI-RS.
FIG. 2 is a flowchart showing an example of a DL BM procedure using SSB.
FIG. 3 illustrates a functional framework of an AI/ML model.
FIG. 4 illustrates a signaling procedure according to an embodiment of the present disclosure.
FIG. 5 is a flow chart illustrating a method performed by a user equipment according to an embodiment of the present disclosure.
FIG. 6 is a flow chart illustrating a method performed by a base station according to another embodiment of the present disclosure.
FIG. 7 illustrates configuration of a first device and a second device according to an embodiment of the present disclosure.

### [DETAILED DESCRIPTION]

A detailed description to be disclosed below together with the accompanying drawing is to describe exemplary embodiments of the present disclosure and not to describe a unique embodiment for carrying out the present disclosure. The detailed description below includes details to provide a complete understanding of the present disclosure. However, those skilled in the art know that the present disclosure may be carried out without the details.

In some cases, in order to prevent a concept of the present disclosure from being ambiguous, known structures and devices may be omitted or illustrated in a block diagram format based on core functions of each structure and device.

Hereinafter, downlink (DL) means communication from the base station to the terminal and uplink (UL) means communication from the terminal to the base station. In downlink, a transmitter may be part of the base station, and a receiver may be part of the terminal. In uplink, the transmitter may be part of the terminal and the receiver may be part of the terminal. The base station may be expressed as a first communication device and the terminal may be expressed as a second communication device. A base station (BS) may be replaced with terms including a fixed station, a Node B, an evolved-NodeB (eNB), a Next Generation NodeB (gNB), a base transceiver system (BTS), an access point (AP), a network (5G network), an AI system, a road side unit (RSU), a vehicle, a robot, an Unmanned Aerial Vehicle (UAV), AR(Augmented Reality) device, VR(Virtual Reality) device, and the like. Further, the terminal may be fixed or mobile and may be replaced with terms including a User Equipment (UE), a Mobile Station (MS), a user terminal (UT), a Mobile Subscriber Station (MSS), a Subscriber Station (SS), an Advanced Mobile Station (AMS), a Wireless Terminal (WT), a Machine-Type Communication (MTC) device, a Machine-to-Machine (M2M) device, and a Device-to-Device (D2D) device, the vehicle, the robot, an AI module, an Unmanned Aerial Vehicle (UAV), AR(Augmented Reality) device, VR(Virtual Reality) device, and the like.

### Beam Management (BM)

A BM procedure as layer 1 (L1)/layer 2 (L2) procedures for acquiring and maintaining a set of base station (e.g., gNB, TRP, etc.) and/or terminal (e.g., UE) beams which may be used for downlink (DL) and uplink (UL) transmission/reception may include the following procedures and terms.
- Beam measurement: Opeation of measuring characteristics of a beam forming signal received by the eNB or UE.
- Beam determination: Operation of selecting a transmit (Tx) beam/receive (Rx) beam of the eNB or UE by the eNB or UE.
- Beam sweeping: Operation of covering a spatial region using the transmit and/or receive beam for a time interval by a predetermined scheme.
- Beam report: Operation in which the UE reports information of a beamformed signal based on beam measurement.

The BM procedure may be divided into (1) a DL BM procedure using a synchronization signal (SS)/physical broadcast channel (PBCH) Block or CSI-RS and (2) a UL BM procedure using a sounding reference signal (SRS).

Further, each BM procedure may include Tx beam sweeping for determining the Tx beam and Rx beam sweeping for determining the Rx beam.

### DL BM

The DL BM procedure may include (1) transmission of beamformed DL reference signals (RSs) (e.g., CIS-RS or SS Block (SSB)) of the eNB and (2) beam reporting of the UE.

Here, the beam reporting includes a preferred DL RS identifier (ID)(s) and L1-Reference Signal Received Power (RSRP) corresponding to the preferred DL RS identifier (ID)(s).

The DL RS ID may be an SSB Resource Indicator (SSBRI) or a CSI-RS Resource Indicator (CRI).

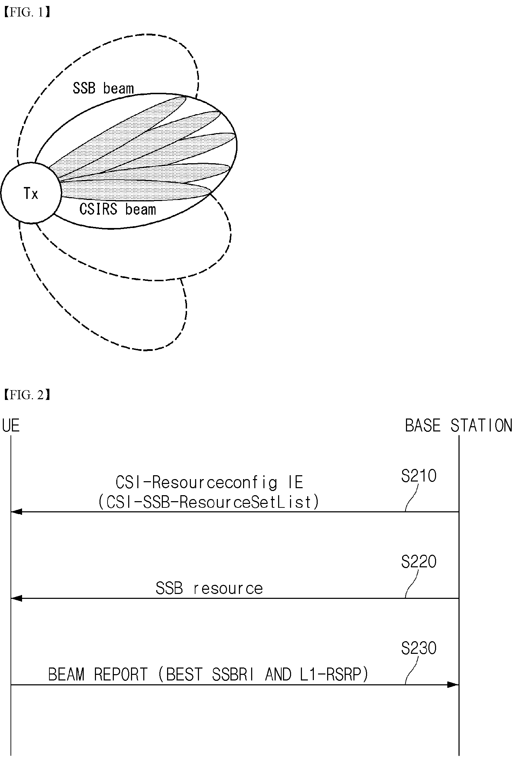

FIG.1 illustrates an example of beamforming using SSB and CSI-RS.

As illustrated in FIG. 1, an SSB beam and a CSI-RS beam may be used for the beam management. A measurement metric is an L1-RSRP for each resource/block. The SSB may be used for coarse beam management and the CSI-RS may be used for fine beam management. The SSB may be used for both the Tx beam sweeping and the Rx beam sweeping.

The Rx beam sweeping using the SSB may be performed while the UE changes the Rx beam for the same SSBRI across multiple SSB bursts. Here, one SS burst includes one or more SSBs and one SS burst set includes one or more SSB bursts.

FIG. 2 is a flowchart showing an example of a DL BM procedure using SSB.

A configuration for beam report using the SSB is performed during a CSI/beam configuration in an RRC connected state (or RRC connected mode).
- The UE receives from the eNB CSI-ResourceConfig IE including CSI-SSB-ResourceSetList including SSB resources used for the BM (S210).

Table 1 shows an example of CSI-ResourceConfig IE. As shown in Table 1, a BM configuration using the SSB is not separately defined and the SSB is configured like the CSI-RS resource.

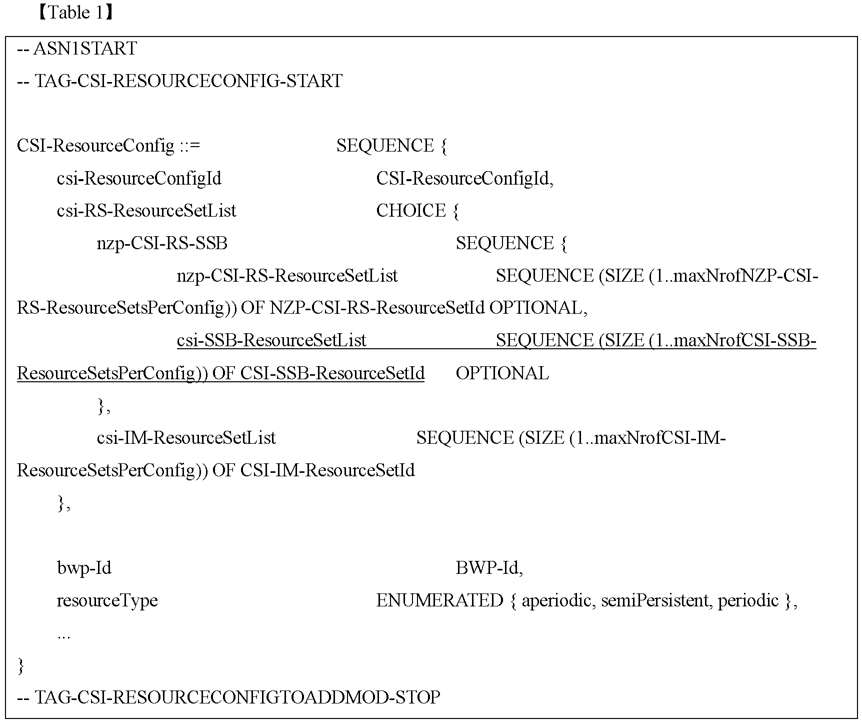

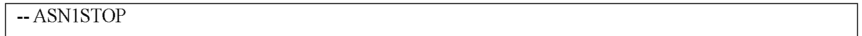

In Table 1, csi-SSB-ResourceSetList parameter represents a list of SSB resources used for beam management and reporting in one resource set. Here, SSB resource set may be configured as {SSBx1, SSBx2, SSBx3, SSBx4, ...}. For example, SSB index may be defined as 0 to 63.
- The UE receives from the eNB the SSB resource based on the CSI-SSB-ResourceSetList (S220).
- When CSI-reportConfig associated with reporting of SSBRI and L1-RSRP is configured, the UE (beam) reports to the eNB best SSBRI and L1-RSRP corresponding thereto (S230).

In other words, when reportQuantity of the CSI-reportConfig IE is configured as 'ssb-Index-RSRP', the UE reports to the eNB best SSBRI and L1-RSRP corresponding thereto.

In addition, when the CSI-RS resource is configured in the same OFDM symbol(s) as SSB (SS/PBCH Block) and 'QCL-TypeD' is applicable, the UE may assume that the CSI-RS and the SSB are quasi co-located from the viewpoint of 'QCL-TypeD'.

Here, the QCL TypeD may mean that antenna ports are QCL from the viewpoint of a spatial Rx parameter. When the UE receives a plurality of DL antenna ports having a QCL Type D relationship, the same Rx beam may be applied. Further, the UE does not expect that the CSI-RS is configured in an RE overlapped with the RE of the SSB.

### BM enhancements in NR Rel-16

The DL/UL beam indication standardized in 3GPP NR Rel-15 has been designed to separately indicate beams for each DL/UL channel/RS resource to ensure beam indication flexibility, and this indication method has been designed separately for each channel/RS.

This design direction eventually had the problem that a base station had to indicate a beam change for each channel/RS resource to multiple UEs communicating with the base station using a single beam in order to change a serving beam for the multiple UEs, which resulted in large signaling overhead and large beam change latency. Along with the UL beam change, UL power control-related parameters, especially pathloss RS (PL RS), had to be changed for each UL channel/RS, which also resulted in signaling overhead/latency problems. To complement these drawbacks, five features were introduced in Rel-16. Table 2 below shows the five features.

**[Table 2]**

| |
|---|
| 1. Default spatial relation/PL RS |
| Firstly, since many UEs in NR FR2 deployment use a single analog beam at a time and meet the beam correspondence, this enables unifying DL and UL beam indication, meaning that a DL RS resource can be commonly used as a source RS for both DL beam and UL beam indication. It is also possible to unify the source DL RS for DL/UL beam indication with the pathloss reference RS, i.e. the RS used for pathloss estimation at UE for UL power control, because gNodeB would use a same beam direction for both transmission of the DL RS and reception of the UL signal. Based on this motivation, the feature so called 'default spatial relation/pathloss reference RS' was introduced in Rel-16. In this mode of operation, spatial relation RS and pathloss reference RS do not need to be explicitly indicated from gNodeB to UE, and UE uses one source RS for PDCCH/PDSCH beam as for the spatial relation RS and the pathloss reference RS. Therefore, gNodeB only needs to update the DL source RS whenever needed to update the serving Tx/Rx beam for the UE. Above operation can be enabled for dedicated PUCCH, SRS, and/or PUSCH scheduled by DCI format 0_0 by respective RRC enablers. |
| 2. Multi-CC simultaneous TCI/spatial relation update |
| Secondly for multi-carrier operation, it is common that antenna/RF components are shared for same or multiple bands at both gNodeB and UE sides. For example, multi-band antenna is a very common tool for UE implementation to minimize size and cost of the communication modules. This means that a beam can be commonly used for transmission and/or reception across multiple component carriers (CCs) in one or multiple bands. Based on this motivation, BM signaling can be saved via switching beam indication from per CC basis into per CC group basis. Therefore, in Rel-16, it was introduced that the source RS for DL/UL beam indication can be updated simultaneously across multiple CCs. For this operation, one or two CC lists can be configured to UE by higher layer for DL and UL, respectively. Once source RS ID(s) are activated for DL beam indication, the RS(s) with the same RS ID(s) are also activated in other CC(s) in the same CC list. Similarly, once a spatial relation RS is activated for an SRS resource in a CC, the same RS is activated as spatial relation RS for the SRS resource(s) with the same resource ID in other CC(s) in the same CC list. |
| 3. PUCCH resource group based spatial relation update |
| Third, in Rel.15, the spatial relation RS for PUCCH can be activated/deactivated per resource level. Since NR allows up to 128 PUCCH resources per UE, this per-resource based signaling would require a large amount of beam indication signaling for high/mid mobility UE. Due to the fact that one or a few beams are typically used |

| |
|---|
| across all PUCCH resources, e.g., one common beam per UE or per UE panel, PUCCH resource group based spatial relation update mechanism was introduced in Rel-16. For a UE, up to four PUCCH resource groups can be configured by RRC per BWP, and one MAC CE can activate/deactivate a common spatial relation RS for all the PUCCH resources in the same resource group. |
| 4. MAC CE based spatial relation indication for aperiodic/semi-persistent SRS |
| Fourth, SRS is an important tool for UL link adaptation and for DL channel estimation using DL-UL channel reciprocity. In Rel.15, spatial relation RS for aperiodic SRS was configured by RRC only, meaning that a large number of SRS resources with different spatial relation RSs need to be configured by RRC to support high mobility UE, for gNodeB to dynamically select and trigger one SRS resource among them according to UE mobility. To alleviate this burden, MAC CE based spatial relation indication for aperiodic/semi-persistent SRS was introduced in Rel-16. Using this MAC CE, spatial relation RSs for a set of SRS resources can be updated together. |
| 5. MAC CE based PL RS update for aperiodic/semi-persistent SRS and PUSCH |
| Fifth, in Rel. 15, pathloss reference RSs for UL power control for PUSCH and SRS could only be configured by RRC and the maximum configurable number of pathloss RSs was limited to a small number, which was four. This could lead to frequent RRC reconfiguration considering sharply beamformed RS transmission and high UE mobility in FR2. To address this issue, MAC CE based pathloss reference RS update for aperiodic/semi-persistent SRS and PUSCH was introduced in Rel-16. The maximum configurable number of pathloss reference RSs by RRC was increased to 64, and the new MAC CE can activate up to four pathloss reference RSs among them. Two MAC CEs were introduced for SRS and PUSCH, respectively. |

In Rel-16, enhancements related to beam reporting were made in addition to the beam/PL RS indication-related enhancements described above. In Rel-15, a mode in which a UE measures/reports L1-RSRP for each beam RS is supported. However, in an environment with high inter-beam interference, it is difficult to guarantee that a specific beam RS has good quality as a serving beam just because L1-RSRP, i.e., a reception intensity of the specific beam RS is high. In other words, the UE may select a beam, that has a high reception intensity but has high beam interference, and report the beam to a base station. To overcome this drawback, Rel-16 supports a new beam reporting mode in which the base station configures resources for interference measurement as well as RSs for channel measurement, and the UE measures L1-SINR for the channel resources and the interference resources based on this and reports several RSs with high L1-SINR value.

### BM enhancements in NR Rel-17

As described above, various BM enhancements were made in Rel-16. In particular, the features were created that can significantly reduce the signaling overhead/latency in relation to the beam indication method. However, channel/RS-unified beams are still not configured/indicated to a UE operating with a single serving beam.

Based on this motivation, Rel-17 will standardize a channel/RS unified beam configuration/indication method. In NR, a DL beam is indicated through a transmit configuration indicator (TCI) and thus is referred to as a unified TCI state. An existing TCI state was separately configured/indicated for each DL RS/channel, but the unified TCI state is characterized by unified configuration/indication. Basically, a DL unified TCI state indicates a QCL type-D RS which is unified applied to (some) PDCCHs, PDSCH, and (some) CSI-RS resources, and an UL unified TCI state indicates a spatial relation RS (and PL RS) which is unified applied to (some) PUCCHs, PUSCH, and (some) SRSs. Since the UL spatial relation and PL RS can also be matched with the DL beam RS for a UE, for which beam correspondence is established, in the same manner as Rel-16 default spatial relation/PL RS feature, the channels/RS to which the unified TCI state is applied can encompass both DL channels/RSs and UL channels/RSs. This is referred to as a joint DL/UL TCI state. That is, the following two modes will be supported.
- Joint DL/UL TCI configuration/indication mode: DL RS configured/indicated in a joint TCI state may be applied as not only the QCL type-D RSs for DL channels/RSs but also the spatial relation RSs (and PL RS) for UL channels/RSs. That is, if an update to the joint TCI state is indicated, the beam RSs (or/and PL RS) for the DL channels/RSs and the UL channels/RSs may be changed together.
- Separate DL and UL TCI configuration/indication mode: QCL type-D source RSs for DL channels/RSs are unified and configured/indicated by a DL TCI state, and the spatial relation RSs (and PL RS) for UL channels/RSs are unified and configured/indicated by the UL TCI state. The DL TCI state and the UL TCI state are separately configured/indicated.

The DL/UL/joint TCI state will be indicated/updated via MAC-CE and/or DCI. More specifically, one or more TCI states of multiple TCI states configured by RRC (called a TCI state pool) are activated by MAC-CE. If the multiple TCI states are activated by MAC-CE, one of the multiple TCI states is indicated by DCI.

The DCI indication will be supported via a downlink DCI format (DCI1-1/1-2) in which a TCI field is supported, and will be supported both with PDSCH scheduling and without PDSCH scheduling. In the latter case, since the PDSCH scheduling is omitted (similar to the DCI-based semi-persistent scheduling (SPS) release method), ACK transmission of the UE for the corresponding DCI will be supported.

Enhancements related to beam report will be made in Rel-17. Rel-17 beam report mode will support a mode in which a UE measures/reports an optimal beam RS for each TRP, targeting a multi-TRP environment. To this end, if a beam measurement RS set/group is divided into two subsets/sub-groups, and the base station configures them, the UE will select RS(s) for each subset/sub-group and report them along with a quality value (L1-RSRP, [L1-SINR]) of the corresponding RS.

### AI/ML related Description

With the technological advancement of artificial intelligence/machine learning (AI/ML), node(s) and UE(s) constituting a wireless communication network are becoming more intelligent/advanced.

In particular, due to the intelligence of networks/base stations, it is expected that various network/base station decision parameters can be quickly optimized and derived/applied based on various environmental parameters.

The environmental parameters may include at least one of distribution/location of base stations, distribution/location/material of buildings/furniture, etc., location/movement direction/speed of UEs, or climate information. However, the above-described parameters are only examples, and the environmental parameters may further include other environmental parameters related to the network/base station decision parameters in addition to the listed parameters.

The network/base station decision parameters may include at least one of transmission/reception power of each base station (BS), transmission power of each UE, precoder/beam of BS/UE, time/frequency resource allocation for each UE, or duplex method of each BS. However, the above-described parameters are only examples, and the network/base station decision parameters may further include other parameters determined by the network/base station in addition to the listed parameters.

In line with this trend, many standardization organizations (e.g., 3GPP, O-RAN) are considering introduction of AI/ML, and studies on this are also actively underway.

The AI/ML may be easily referred to as artificial intelligence based on deep learning in a narrow sense, but conceptually, it may be classified as below.
- Artificial Intelligence: it is any automation that allows machines to do the work that people would otherwise do.
- Machine Learning: it refers to a technology in which machines learn patterns for decision-making from data on their own without explicitly programming rules.
- Deep Learning: it is an artificial neural network-based model, and allows machines to perform feature extraction and decision from unstructured data at once. This algorithm depends on a multilayer network consisting of interconnected nodes for feature extraction and transformation, inspired by biological nervous systems, i.e., neural networks. A common deep learning network architecture includes deep neural network (DNN), recurrent neural network (RNN), and convolutional neural network (CNN).

As above, artificial intelligence (AI) is the broadest concept of AI/ML, and deep learning is the narrowest concept of AI/ML. Machine learning (ML) may be interpreted as a narrower concept than artificial intelligence and a broader concept than deep learning.

### Types of AI/ML based on various criteria

### - Offline vs Online

### Offline Learning

- Offline learning faithfully follows a sequential procedure of database collection, learning, and prediction. That is, the collection and learning may be performed offline, and the completed program may be installed in the field and used for prediction work. In most situations, such offline learning methods are used.

### Online Learning

- Online learning refers to a method of gradually improving performance by incrementally learning with additional data generated, taking advantage of the fact that data that can be used for recent learning is continuously generated via the Internet.

### Classification based on AI/ML Framework concept

### - Centralized Learning

In centralized learning, when training data collected from multiple different nodes is reported to a centralized node, all data resources/storage/learning (e.g., supervised learning, unsupervised learning, reinforcement learning, etc.) are performed in one centralized node.

### - Federated Learning

Federated learning is constructed based on data in which a collective model exists across individually distributed data owners. Instead of collecting data into the model, AI/ML models are imported into a data source, allowing local nodes/individual devices to collect data and train their own copies of the model, so there is no need to report source data to a centralized node.

In the federated learning, parameters/weight of the AI/ML model is sent again to the centralized node to support general model training. The federated learning has advantages in terms of increase in computation speed and information security. That is, a process of uploading personal data to a central server is unnecessary, and leakage and misuse of personal information can be prevented.

### - Distributed Learning

Distributed learning refers to a concept that machine learning processes are scaled and distributed across a cluster of nodes. Training models are shared across multiple nodes split and operating simultaneously to speed up model training.

### Classification according to learning method

### - Supervised Learning

Supervised learning is a machine learning task that aims to learn a mapping function from input to output, given a labeled data set. The input data is called training data and has known labels or results. Examples of the supervised learning are as follows.
1) Regression: Linear Regression, Logistic Regression
2) Instance-based Algorithms: k-Nearest Neighbor (KNN)
3) Decision Tree Algorithms: CART
4) Support Vector Machines: SVM
5) Bayesian Algorithms: Naive Bayes
6) Ensemble Algorithms: Extreme Gradient Boosting, Bagging: Random Forest

Supervised learning may be further grouped into regression and classification problems, where classification is predicting labels and regression is predicting quantities.

### - Unsupervised Learning

Unsupervised learning is a machine learning task that aims to learn functions that describe hidden structures in unlabeled data. The input data is not labeled and there are no known results. Some examples of unsupervised learning include K-means clustering, Principal Component Analysis (PCA), nonlinear Independent Component Analysis (ICA), and long short-term memory (LSTM).

### - Reinforcement Learning

In reinforcement learning (RL), an agent aims to optimize long-term goals by interacting with the environment based on a trial and error process, and is goal-oriented learning based on interaction with the environment. Examples of RL algorithm are as follows.
1) Q-learning
2) Multi-armed bandit learning
3) Deep Q Network
4) State-Action-Reward-State-Action (SARSA)
5) Temporal Difference Learning
6) Actor-critic reinforcement learning
7) Deep deterministic policy gradient
8) Monte-Carlo tree search

The reinforcement learning can be additionally grouped into model-based reinforcement learning and model-free reinforcement learning.

Model-based reinforcement learning: it refers to an RL algorithm that uses a predictive model, and obtains the transition probabilities between states using various dynamic states of the environment and a model in which these states lead to rewards.

Model-free reinforcement learning: it refers to a RL algorithm based on value or policy that achieves the maximum future reward. Multi-agent environments/states are computationally less complex and do not require an accurate representation of the environment.

RL algorithms can also be classified into value-based RL vs. policy-based RL, policy-based RL vs. non-policy RL, etc.

### Representative Model of Deep Learning

### 1. Feed-Forward Neural Network (FFNN)

FFNN consists of an input layer, a hidden layer, and an output layer.

### 2. Recurrent Neural Network (RNN)

RNN is a type of artificial neural network in which hidden nodes are connected to directed edges to form a directed cycle. It is a model suitable for processing data that sequentially appears, such as voice and text.

### 3. Convolution Neural Network (CNN)

CNN is used for two purposes of reducing model complexity and extracting good features by applying convolution operations generally used in video processing or image processing fields.
- Kernel or filter: it refers to a unit/structure that applies weight to an input of a specific range/unit.
- Stride: it refers to a range of movement of the kernel within the input.
- Feature map: it refers to a result of applying the kernel to the input.
- Padding: it refers to a value added to adjust the size of the feature map.
- Pooling: it refers to an operation to reduce the size of the feature map by downsampling the feature map (e.g., max pooling, average pooling).

### 4. Auto Encoder

An auto encoder refers to a neural network that receives a feature vector x as input and outputs the same or similar vector x'. An input node and an output node of the auto encoder have the same feature.

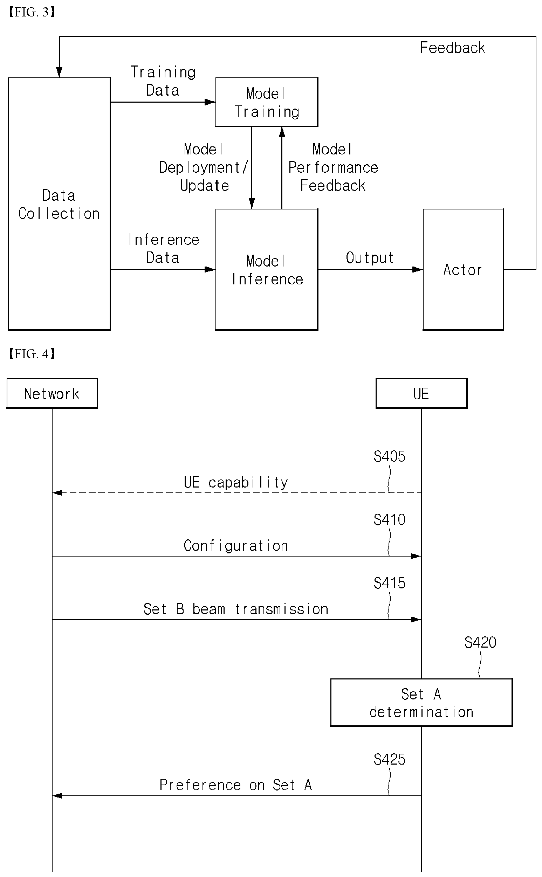

FIG. 3 illustrates a functional framework of an AI/ML model.

In the functional framework illustrated in FIG. 3, the definition of each term and the operation of each function may be based on Table 3 below.

**[Table 3]**

| |
|---|
| Data collection: Data collected from the network nodes, management entity or UE, as a basis for ML model training, data analytics and inference. |
| ML Model: A data driven algorithm by applying machine learning techniques that generates a set of outputs consisting of predicted information, based on a set of inputs |
| ML Training: An online or offline process to train an ML model by learning features and patterns that best present data and get the trained ML model for inference. |
| ML Inference: A process of using a trained ML model to make a prediction or guide the decision based on collected data and ML model. |
| • Data Collection is a function that provides input data to Model training and Model inference functions. AI/ML algorithm specific data preparation (e.g., data pre-processing and cleaning, formatting, and transformation) is not carried out in the Data Collection function. |
| Examples of input data may include measurements from UEs or different network entities, feedback from Actor, output from an AI/ML model. |
| ∘ Training Data: Data needed as input for the AI/ML Model Training function. |
| ∘ Inference Data: Data needed as input for the AI/ML Model Inference function. |
| • Model Training is a function that performs the ML model training, validation, and testing which may generate model performance metrics as part of the model testing procedure. The Model Training function is also responsible for data preparation (e.g. data pre-processing and cleaning, formatting, and transformation) based on Training Data delivered by a Data Collection function, if required. |
| ∘ Model Deployment/Update: Used to initially deploy a trained, validated, and tested AI/ML model to the Model Inference function or to deliver an updated model to the Model Inference function. |
| ▪ Note: Details of the Model Deployment/Update process as well as the use case specific AI/ML models transferred via this process are out of RAN3 Rel-17 study scope. The feasibility to single-vendor or multi-vendor environment has not been studied in RAN3 Rel-17 study. |
| • Model Inference is a function that provides AI/ML model inference output (e.g. predictions or decisions) . Model Inference function may provide model performance feedback to Model Training function when applicable. The Model inference function is also responsible for data preparation (e.g. data pre-processing and cleaning, formatting, and transformation) based on Inference Data delivered by a Data Collection function, if required. |
| ∘ Output: The inference output of the AI/ML model produced by a Model Inference function. |
| ▪ Note: Details of inference output are use case specific. |
| ∘ Model Performance Feedback: It may be used for monitoring the performance of the AI/ML model. |
| ▪ Note: Details of the Model Performance Feedback process are out of RAN3 scope. |
| • Actor is a function that receives the output from the Model inference function and triggers or performs corresponding actions. The Actor may trigger actions directed to other entities or to itself. |
| ∘ Feedback: Information that may be needed to derive training or inference data or performance feedback. |

### Data Set

A data set used in AI/ML is classified into training data, validation data, and test data, and their definition is as follows.

### - Training data

### Data set for training a model

### - Validation data

### Data set for verifying a model whose training has been already completed

The validation data is a data set usually used to prevent over-fitting of a training data set.

The validation data is a data set for selecting the best among various models trained during the training process. Therefore, the validation data may be seen as a data set related to training.

### - Test data

The test data is a data set for final evaluation. The test data is independent of training.

The data set may use a training set including the above-described data in a certain ratio.

For example, a training set including training data and validation data in a ratio of 8:2 or 7:3 may be used.

For example, a training set including training data, validation data, and test data in a ratio of 6:2:2 may be used.

### Collaboration level

A collaboration level can be defined as follows depending on whether the AI/ML function between a base station and a UE is capable.

**[Table 4]**

| |
|---|
| **Cat 0a)** No collaboration framework: AI/ML algorithms purely implementation based and not requiring air-interface changes. -> Baseline |
| **Cat 0b)** No collaboration framework with modified Air-Interface catering to efficient implementation-based AI/ML algorithms. |
| **Cat 1)** Inter-node assistance to improve the respective nodes' AI/ML algorithms. This would apply to UEs getting assistance from gNBs (for training, adaptation, etc.) and vice-versa. This level does not require model exchange between network nodes. |
| **Cat 2)** Joint ML operation between UEs and gNBs. This level requires AI/ML model instruction or exchange between network nodes. |

The collaboration levels shown in Table 4 are examples and may be modified and utilized differently from the illustrated examples based on the implementation method. For example, a collaboration level that combines two or more of the illustrated collaboration levels may be defined/utilized. For example, collaboration level(s) excluding one or more of the illustrated collaboration levels may be utilized.

In the present disclosure, '/' may be interpreted as 'and', 'or', or 'and/or' according to according to the context. In the present disclosure, the 'beam' may refer to a source RS for a 'spatial filter' or a 'spatial relation' and may be interpreted as QCL (type-D) RS or TCI state or spatial relation RS (in uplink).

3GPP Rel-18 started a study on how to use AI/ML in the air-interface. The study item (SI) covers beam management, CSI, and positioning as the main use cases of AI/ML. The present disclosure covers a beam management method among them.

There may be two use cases performing the improved beam management using AI/ML: 'improvement of beam management performance through spatial beam prediction' and 'improvement of beam management performance through temporal beam prediction.' The present disclosure mainly considers the 'improvement of beam management performance through spatial beam prediction,' but it should be noted that the technique in the present disclosure can be modified and applied to the 'improvement of beam management performance through temporal beam prediction.'

The 'improvement of beam management performance through spatial beam prediction' is a use case that achieves more improved beam management precision with lower RS overhead based on UE location/mobility information, etc. as a measurement result for present/past beam RS. In this instance, AI/ML of a UE and/or a network (NW) may be used in a spatial beam prediction operation. For example, AI/ML may be used to achieve performance comparable to beam selection from a large number of beam RSs based on a result measured from a small number of beam RSs.

The AI/ML based beam prediction may be defined based on inputs and outputs related to an AI/ML model (of the UE and/or NW).

For example, the input may be information related to measurement of beams (e.g., RSs related to beams), and the output may be information on specific beam(s) (e.g., ID(s) of RSs related to specific beam(s)).

For example, the input may be reference signal received power (RSRP) of beams in a first set, and the output may be RSRP of beams in a second set (e.g., RSRP of RSs related to all beams or RSRP of RSs related to Set A of beams). The RSRP of the beams in the first set may include RSRP of RSs related to some of all the beams and/or RSRP related to Set B of beams. The RSRP of the beams in the second set may include RSRP of RSs related to all the beams and/or RSRP of RSs related to the Set A of beams.

Table 5 below summarizes the discussions and discussion results related to beam performance improvement.

**[Table 5]**

| **Conclusion (109e):** | | |
|---|---|---|
| For the sub use case BM-Casel, consider the following alternatives for further study: | | |
| • Alt.1: Set B is a subset of Set A | | |
| | | o FFS: the number of beams in SetA and B |
| | | o FFS: how to determine Set B out of the beams in Set A (e.g., fixed pattern, random pattern, ...) |
| • Alt.2: SetA and Set B are different (e.g. SetA consists of narrow beams and Set B consists of wide beams) | | |
| | | o FFS: the number of beams in SetA and B |
| | | o FFS: QCL relation between beams in Set A and beams in Set B |
| | | o FFS: construction of Set B (e.g., regular pre-defined codebook, codebook other than regular pre-defined one) |
| • Note1: Set A is for DL beam prediction and Set B is for DL beam measurement. | | |
| • Note2: The narrow and wide beam terminology is for SI discussion only and have no specification impact | | |
| • Note3: The codebook constructions of Set A and Set B can be clarified by the companies. | | |

| **Conclusion (109e)** | | |
|---|---|---|
| Regarding the sub use case BM-Casel, further study the following alternatives for AI/ML input: | | |
| • Alt.1: Only L1-RSRP measurement based on Set B | | |
| • Alt.2: L1-RSRP measurement based on Set B and assistance information | | |
| | • FFS: Assistance information. The following were mentioned by companions in the discussion: Tx and/or Rx beam shape information (e.g., Tx and/or Rx beam pattern, Tx and/or Rx beam boresight direction (azimuth and elevation), 3dB beamwidth, etc.), expected Tx and/or Rx beam for the prediction (e.g., expected Tx and/or Rx angle, Tx and/or Rx beam ID for the prediction), UE position information, UE direction information, Tx beam usage information, UE orientation information, etc. | |
| | | • Note: The provision of assistance information may be infeasible due to the concern of disclosing proprietary information to the other side. |
| • Alt.3: CIR based on Set B | | |
| • Alt.4: L1-RSRP measurement based on Set B and the corresponding DL Tx and/or Rx beam ID | | |
| • Note1: It is up to companies to provide other alternative(s) including the combination of some alternatives | | |
| • Note2: All the inputs are "nominal" and only for discussion purpose. | | |

In the results, BM-Case1 refers to 'case of performing estimation/prediction of beams of Set A based on a measurement result of beams included in Set B.' The Set A and the Set B are different.

The Set A and the Set B related to embodiments of the present disclosure described below may be defined based on Table 5 above. The Set B may be a set including beams related to RSs transmitted by the base station (RSs received by the UE). The Set A may be a set of beams used to estimate/determine beams based on a measurement result of RSs related to the Set B. The Set A may be a set of beams used to indicate a specific beam.

The purpose of the BM-Case1 is to select/estimate/predict a beam more precisely than selecting a beam based on the existing method. Specifically, according to the BM-Casel, a beam is selected/estimated/predicted based on the Set A, which is more precise than the Set B (e.g., in selection the Set A that includes a larger number of beams than the Set B and has a shape of a beam with a narrower width than the beam of the Set B).

The problem here is who will decide Set A and how.

For example, an NW (or base station) may determine Set A and configure/indicate it to a UE. To apply this method, the NW may configure/indicate information on a relationship between beams belonging to the Set A and beams belonging to Set B (e.g., relative/absolute beam angle information, relative/absolute beam width information, etc.) to the UE. The UE may select beam(s) of the Set A from a measurement result of the Set B beams based on AI/ML.

For example, the UE may select the Set A preferred by the UE and report it to the base station. This has an advantage of reducing uplink channel information (UCI) payload by allowing beams to be selected/reported from among Set A, which includes a smaller number of beams, upon the beam reporting of the UE. This embodiment is described in detail below.

### Method 1

A UE reports configuration/property of preferred Set A (from a measurement result for Set B) to an NW (or base station).

For example, the base station may configure a master set, which can be included in the Set A, to the UE. The UE may report, to the base station, configuration information for the preferred Set A (based on an instantaneous measurement result for the Set B) in the configured master set. In other words, all beams (e.g., RS IDs 0 to 63) which can be included in the Set A may be configured based on the master set. The UE may determine/report configuration information for the preferred Set A (e.g., RS IDs 10 to 30) by the UE based on the master set.

For example, the base station may configure a plurality of Set A candidates to the UE. The UE may report, to the NW, one or multiple preferred Set A candidates among the Set A candidates.

For example, the UE may report, to the NW, information on properties preferred by the UE with respect to beams constituting the Set A. The 'properties for beams' may be information on a beam angle (e.g., boresight direction/angle), a range of beam angle, a beam width (e.g., 3dB beam width), a total number of beams, etc. The information for the properties may be an absolute value, but a relative value between beams. As a specific example, the information for the properties preferred by the UE may include i) information indicating (how much) a reduced beam width is preferred compared to the beams belonging to the Set B and/or ii) information indicating (how much) an increased beam angle range (e.g., difference of max and min of (azimuth/elevation) beam directions) is preferred compared to the beams belonging to the Set B.

For example, candidate values for the properties that the beams of the Set A can have may be configured by the base station or specified/configured as a specific rule. As a specific example, the candidate values may be specified/configured as in the following i) and ii).
i) Some properties (e.g., beamwidth) are the same as the Set A, but a range of the beam angle is increased by N times.
ii) Some properties (e.g. beamwidth) are the same as the Set A, but the number of beams is increases by N times.

However, the i) and ii) are merely examples, and are not intended to limit the application/implementation of candidate values for the Set A properties to the range of the beam angle and the number of beams. That is, the candidate values may be set with properties other than the range of the beam angle and/or the number of beams changed (decreased/increased).

Among the candidate values, an index/indicator for a candidate value preferred by the UE may be reported from the UE to the base station.

The UE may judge/determine the beam properties of the Set A based on AI/ML. To this end, various input parameters may be used/applied. An example of the configuration of input parameters and output parameters of the AI/ML is as follows.

AI/ML input parameters: Set B beam properties (e.g., angle, beamwidth, etc.), measured RSRPs of Set B beams (and Rx beam properties (e.g., angle, beamwidth, etc.))

### AI/ML output: Set A beam (property) indicator

The input parameters may include at least one of characteristic(s) of Set B (e.g., angle, beamwidth, etc.) and RSRPs and/or Rx beam characteristic(s) related to beams of Set B. Based on the input parameters, AI/ML of the UE may determine properties of Set A beams or an indicator indicating the properties of Set A beams.

For the application of the proposed method, information on a relationship between i) beams of Set B and ii) beams that can be included in Set A may be considered. The information on the relationship may be configured/indicated to the UE by the base station. For example, the information on the relationship may be pre-specified/pre-defined/pre-configured by a specific rule.

The beams that can be included in the Set A may include at least one of the beams to be included in the master set and/or the beams included in the Set A candidates. The information on the relationship between the beams of the Set B and the beams that can be included in the Set A may include relative/absolute beam angle information and/or relative/absolute beam width information.

An example of a relationship between the Set A beams (e.g., beams that can be included in the Set A) and the Set B beams is as follows. The Set A beams may be defined/configured in the form of a (linear) combination of (some of) the Set B beams as below.
(1) Set A candidate 0 = {α₁₁ *first set B beam + α₁₂*second set B beam, α₂₁*first set B beam + α₂₂*second set B beam, α₃₁*third set B beam + α₃₂*fourth set B beam, ...},
(2) Set A candidate 1 = {β₁₁ *first set B beam + β₁₂*second set B beam, β₂₁*first set B beam + β₂₂*second set B beam, β₃₁*third set B beam + β₃₂*fourth set B beam, ...},
(3) Set A candidate 2, ...

In the above example, αᵢⱼ values and βᵢⱼ values may be pre-specified or values set by the base station, where i and j are a natural number.

For another example, Set A = {α₁₁ *first set B beam + α₁₂*second set B beam, α₂₁*first set B beam + α₂₂*second set B beam, α₃₁*third set B beam + α₃₂*fourth set B beam may be configured/specified. The UE may select αᵢⱼ values and βᵢⱼ values and report them to the base station. In this case, candidate values of αᵢⱼ values and βᵢⱼ values may be configured or specified by the base station. Or, the UE may freely select the candidate values of αᵢⱼ values and βᵢⱼ values. In this instance, a quantization level (how many bits each value will be expressed in) may be specified/set in relation to the reporting of these values, and the UE may select/report the candidate values based on this.

Similar to the examples above, a rule for generating the Set A candidates or the master set for the Set A may be defined/configured. Specifically, the beams of the Set B may be arranged in a vector form, and each Set A candidate or the master set for the Set A may be generated in the form of a matrix product or vector product for the vectors.

The above methods have the following advantages. Even if absolute/relative beam angle information or beam width information for Set B and Set A is not provided, the UE AI/ML can determine the preferred Set A based on the measurement result of the Set B by the relationship between the candidate Set A beams and the Set B beams specified/configured above. Considering the performance of UE AI/ML training/inference, the base station may have to ensure that (the Set A beams and) the Set B beams satisfy which conditions. For example, the Set B beams can help achieve a certain level of the performance of AI/ML training/inference by ensuring that a beamforming angle difference is the same and a beam width is the same.

An example of configuration of input/output parameters of a UE AI/ML model implemented based on the above examples is as follows.

AI/ML input parameters: Set B beam IDs, measured RSRPs of Set B beams (, and Rx beam properties (angle, beamwidth, etc.)

### AI/ML output: combining coefficients of beam IDs (or Set A candidate index) and predicted RSRP

The input parameters may include at least one of RS ID(s) related to the Set B beams, RSRPs of the Set B beams, and/or Rx beam characteristic(s). AI/ML of the UE may determine combining coefficients (e.g., αᵢⱼ values and βᵢⱼ values), indexes and/or predicted RSRPs of the Set A candidates (e.g., RSRPs of beams in the Set A) based on the input parameters.

The report on the configuration/property of the Set A beams proposed in the method 1 is for beam reporting for the Set A. For the beam reporting for the Set A, the existing beam reporting method, i.e., the method of reporting the beam RS ID(s) (CRI(s) or SSBRI(s)) and the quality value (e.g., L1-RSRP(s)/SINR(s)) for the corresponding RS(s), may be used/utilized.

However, the Set A may include more beams than the Set B, which may result in an excessive increase in UCI payload. In this case, higher granularity (e.g. larger UCI payload) may be applied to some (good quality) beams, and lower granularity (e.g. smaller UCI payload) may be applied to the remaining (low quality) beams.

The report on the configuration/property of the Set A preferred by the UE may be reported together with or separately from the beam report on the Set A. The latter may be a more efficient method if the configuration/property of the preferred Set A does not frequently change. With regard to a method of reporting the configuration/property of the Set A, the following examples of Method 1-1 may be considered.

### Method 1-1

The report on the configuration/property of the Set A preferred by the UE may be performed based on one or more of the following approaches 1) to 3).
Approach 1) Report together with beam report for Set A (e.g., CRI/SSBRI+L1-RSRP/SINR report)
Approach 2) Report separately from beam report for Set A (based on periodic/aperiodic event)
Approach 3) Implicit report through beam report for Set B

The approach 1 is a method of reporting configuration/property information of Set A together with a beam report for the Set A and may be more useful in an environment in which configuration/property of Set A preferred by the UE frequently changes. In addition, the approach 1 has an advantage in terms of implementation complexity of UE/base station operations, because the existing beam reporting method is utilized.

According to an embodiment, an indicator of the Set A may be reported by being included in UCI together with Set Abased beam reporting information (CRI(s)/SSBRI(s)+L1-RSRP(s)/SINR(s)). If the 'configuration/property information of the Set A' is transmitted to the UCI together with a beam report for the Set A, an indicator for the 'configuration/property information of the Set A' may go through a separate UCI encoding process together with beam report information for the Set A (e.g., part-I CSI of two-part CSI encoding). This may be particularly necessary when a size of the Set A (e.g., the number of beams included) varies depending on the reporting of the UE.

For example, when the UE performs beam reporting for the Set A after including 16 beam RSs in the Set A, each beam RS ID (e.g., CRI/SSBRI) is expressed with 4 bits. When the UE performs beam reporting for the Set A after including 64 beam RSs in the Set A, each beam RS ID (e.g., CRI/SSBRI) has to be expressed with 6 bits. As above, since configuration of the Set A (e.g., number of beams) may vary for each beam report, information on the Set A must be separately encoded and reported. Specifically, information on the Set A selected by the UE (e.g., configuration/property information of Set A) may be reported (by being encoding) as part-I of CSI, and beam report information may be reported (by being encoding) as part-II. Through the above operation, ambiguity in UCI interpretation of the base station can be eliminated.

If the size of the Set A is fixed or set by the base station, there is no need to use the separate encoding method as above, and it may be processed in a single encoding process together with the beam report. That is, the configuration/property information of Set A and the beams for Set A may be encoded and reported together.

The approach 2 is a method of reporting the configuration/property information of Set A separately from a beam report for the Set A and may be reported via MAC-CE or UCI, etc. The approach 2 has an advantage in terms of signaling overhead since the configuration/property information of Set A is not reported each time the beam report is performed. The approach 2 can be useful in an environment in which the configuration/property of Set A does not frequently change.

For example, the reporting of the configuration/property information of Set A may be triggered by the base station in a certain period. For example, the reporting of the configuration/property information of Set A may be aperiodically triggered by the base station. For example, the UE may perform the reporting of the configuration/property information of Set A based on an event. The event-based reporting operation is described below with specific examples of the above event.

For example, if the configuration/property information of Set A currently determined by the UE is different from the pre-reported configuration/property information of Set A (or if the pre-reported configuration/property information of Set A is outdated), the UE may perform the reporting of the configuration/property information of Set A.

For example, if the quality of the pre-reported Set A beams falls below a certain level, the UE may perform the reporting of the configuration/property information of Set A.

The event-based report may be performed via MAC-CE. Scheduling request resources (e.g., PUCCH, PRACH) pre-defined for the reporting via MAC-CE may be used. Separate scheduling request resources may be allocated/configured for the reporting via MAC-CE.

In the application of the approach 2, ACK information of the NW for configuration/property information of Set A reported by the UE may be defined. It may be specified/configured so that the reported configuration/property information of Set A is applied after the ACK (after a certain time). For example, it may be assumed that the reported configuration/property information of Set A is applied to the beam reporting for Set A performed after the certain time (i.e., after a certain time has elapsed after the reception of the ACK). The UE may perform the beam reporting based on Set A to which the reported configuration/property information of Set A is applied.

For example, 'application time of the reported Set A' may be defined based on a UE operation, not after the ACK of the base station. Specifically, the 'application time of the reported Set A' may be defined as 'after a certain period of time after the UE performs the corresponding report (i.e., report on the configuration/property information of Set A).'

For example, the 'application time of the reported Set A' may be defined differently from the above-described examples (e.g., time based on a different operation from the ACK operation of the base station and the reporting operation of the UE).

According to the approach 3, the configuration/setting information of Set A may be implicitly reported through beam reporting for Set B (configured/triggered separately from the beam reporting for the Set A). The above operation may match the Set A between the NW and the UE. In other words, the above operation may match Set A used by the NW and Set A preferred by the UE. This approach has an advantage that no separate/additional payload is required for the report on the configuration/property information of Set A, in addition to the payload for the existing beam reporting (the beam reporting for the Set B).

For example, the base station may directly or indirectly pre-configure a relationship between Set A candidate beams and Set B beams to the UE. The relationship may be configured based on quasi co-location (QCL) or a transmission configuration indicator (TCI). The QCL may be configured by qcl-type which is a spatial Rx parameter (type D). If the UE selects and reports a best beam RS (e.g., RS with highest RSRP/SINR) from the Set B, a rule may be defined/configured such that the Set A is generated in conjunction with the reported RS (e.g., RS resource ID). In other words, the configuration/property of Set A may be determined based on RSs (RS resource IDs) of Set B reported by the UE. Specifically, the configuration/property of Set A may be determined/changed/updated based on RSs (RS resource IDs) of Set B reported by the UE.

A rule may be pre-defined such that the Set A is generated based on the reported RSs (RS resource IDs) of Set B (or the configuration/property of Set A is determined). Specific examples of the rule are described below.

For example, Set A (i.e., UE preference Set A) determined/generated based on the above rule may include at least one RS that is in a QCL relationship with RSs selected from the Set B (among RSs related to the Set A candidate beams). The above rule may be defined/configured so that the determined/generated Set A includes N RSs with a specific relationship with the at least one RS.

Examples of the 'specific relationship' are as follows.

For example, the RSs with the 'specific relationship' among the RSs related to the Set A candidate beams may include RSs in which an index value difference (or a modulo value of the index value difference) is within a certain range based on an RS index of the Set A RS corresponding to a selected RS index.

In the RSs with the 'specific relationship', (a modulo value of) a difference between the index of the Set A RS corresponding to the selected RS index and the corresponding RS index may be within a specific range. In the RSs with the 'specific relationship', (the modulo value of) the difference between the index of the Set A RS corresponding to the selected RS index and the corresponding RS index may be a multiple of a specific integer.

The Set A RS corresponding to the selected RS index may refer to an RS related to the Set A candidate beams with the QCL relationship with an RS based on the selected RS index (RS related to the Set B beams).

The following is described on the assumption that the RSs related to the Set A candidate beams are RS indexes 0 to 20, and an RS index with the QCL relationship with the RS index selected from the Set B is 20.

For example, RSs with the 'specific relationship' with the RS index 20 may include RS indexes 17 to 19 in which a difference from the RS index 20 is less than or equal to 3. For example, RSs with the 'specific relationship' with the RS index 20 may include RS indexes 3, 4, 7, 8, 11, 12, 15, 16 and 19 in which a modulo value of a difference from the RS index 20 is less than or equal to 1. For example, RSs with the 'specific relationship' with the RS index 20 may include RS indexes 2, 6, 10, 14 and 18 in which a modulo value of a difference from the RS index 20 is an integer multiple of 2.

For another example, the Set A may include RSs having a beam angle within a certain range from a beam angle of the Set A RS corresponding to the selected RS index. In other words, the RSs with the 'specific relationship' among the RSs related to the Set A candidate beams may include RSs having a beam angle within a certain range based on the beam angle of the RS corresponding to the selected RS index. A difference between the beam angle of the RSs with the 'specific relationship' and the beam angle of the RS corresponding to the selected RS index may be less than or equal to a certain value. The Set A RS corresponding to the selected RS index may refer to an RS related to the Set A candidate beams with the QCL relationship with an RS based on the selected RS index (RS related to the beams of Set B).

For the last example, it may be necessary to inform the UE of beam angle information of each RS in advance. As another example, the base station may pre-configure or specify, by a specific rule, the Set A beams that are determined/selected based on the beams of each Set B. The following are specific examples of the Set A beams that are determined/selected based on the reported Set B beams.
Example 1) If the UE reports CRI#0 of Set B, the Set A includes {CRI#0, CRI#2, CRI#4, CRI#6}.
Example 2) If the UE reports CRI#1 of Set B, the Set A includes {CRI#1, CRI#3, CRI#5, CRI#7}

### Method 2

If a size (e.g., the number of beams) of Set A varies (by selection/reportion of a UE), the following issues may arise in periodic beam reporting or semi-static beam reporting for the Set A. An issue may arise where an UCI payload size may vary during a beam report (i.e., after the beam report and before a next beam report is performed). Specifically, an UCI payload size related to the next beam report may be different from an UCI payload size related to the beam report that has been previously performed. Some solutions for this issue are proposed below.
Method A: (Implementational) method in which a base station performs PUCCH/PUSCH allocation considering a worst case or the UE selects a set size suitable for the payload limit
Method B: Method of applying a CSI omission/dropping rule when a changed UCI payload size exceeds a max UCI payload size allocated by the base station
Method C: Method of introducing a dynamic reconfiguration/selection method for PUCCH/PUSCH resources
Method D: Method of performing beam reporting based on a specific regulation/configured beam reporting method when a changed UCI payload size exceeds a max UCI payload size allocated by the base station

The above-described methods A to D can be applied together with the method 1. However, the above-described embodiments are not limited thereto and can be applied separately from the method 1.

According to the method A, the following base station operation and/or UE operation may be performed. The base station may allocate UCI payloads based on a maximum number of beams capable of constituting the Set A. The UE may perform reporting for Set A based on a UCI payload limit allocated by the base station.

According to the method B, the following UE operation may be performed. If a UCI payload size related to beam reporting for the Set A is greater than the UCI payload limit (e.g., a max payload size related to UCI) allocated by the base station, the UE may omit some information upon the beam reporting or may drop the reporting itself.

Specific examples related to the omitted information are described below.

For example, beam information corresponding to the smallest RSRP/SINR may be omitted first.

For example, the UE may preferentially report beam ID information and omit beam quality information (RSRP/SINR) (for some/all beams). In other words, if the UCI payload size is larger than the pre-allocated payload limit upon the beam reporting of the UE, the beam quality information (RSRP/SINR) may be omitted first.

For example, the UE may report the beam quality value (e.g., RSRP/SINR) for each beam with fewer bits.

In the above examples, the UE may additionally report that the UE has omitted/compressed some information (via part-I CSI in two-part encoding) (e.g., 1-bit indicator for whether to omit/compress). Specifically, the 1-bit indicator for whether to omit/compress may be included in part-I of CSI.

According to the method C, dynamic reconfiguration/selection of PUCCH/PUSCH resources may be performed to quickly reconfigure the PUCCH/PUSCH resources to match the changed size of Set A.

For example, the base station may configure each of PUCCH resources according to a range of the CSI payload size to the UE via RRC. The UE may select and apply the PUCCH resources based on the reported CSI payload.

For example, for semi-persistent CSI on PUSCH, MCS of PUSCH, time/frequency resource allocation information, etc. may be indicated via activation MAC-CE.

The purpose of the operation according to the above examples is to enable adjusting the corresponding value(s) at the start of transmission and/or during the transmission. The corresponding value(s) may include value(s) related to the configuration of PUCCH/PUSCH resources.

For the second example, an application time of the changed value(s) may apply a general activation time for MAC-CE. For example, after 3 ms has elapsed since the ACK of the UE for the PDSCH including the MAC-CE, the changed value(s) (e.g., the changed PUSCH resource configuration related value(s)) may be applied.

According to the method D, if the UCI payload size related to the beam reporting for Set A is greater than the UCI payload limit allocated by the base station, the beam reporting may be performed based on a specific regulation/configured beam reporting method.

Specific embodiments of the 'specific regulation/configured beam reporting method' are described below.

According to an embodiment, the UE may perform beam reporting based on the Set B. This is because the number of beams included in the Set B will not be greater than the number of beams included in the Set A.

According to an embodiment, some beams of the Set A beams reported by the UE based on the specified/configured rule may be excluded to configure Set A (reduced Set A). The UE may perform periodic/semi-persistent beam reporting based on the 'reduced Set A'. For example, beams corresponding to a specific order/index may be excluded from the Set A to configure the reduced Set A. For example, beams corresponding to a specific RS type (e.g., CSI-RS or SSB, removed in the order of aperiodic RS, semi-persistent RS, and periodic RS or removed in the opposite order) may be excluded to configure the reduced Set A.

According to an embodiment, the base station may configure or specify a reference Set A to be used/applied in the case described above (i.e., UCI payload size related to the beam reporting for Set A > UCI payload limit). The UE may report based on the reference Set A. For example, the reference Set A may be configured/specified based on a combination of specific indices in master Set A. For example, the reference Set A may be configured/specified as a candidate corresponding to a specific order (e.g., first) among the Set A candidates.

According to an embodiment, the UE may perform the beam reporting based on Set A that has been previously reported (i.e., has not exceeded the allocated UCI payload).

In the above examples, the UE may additionally report that the UE performs reporting based on a specific specified/configured beam reporting method (via part-I CSI in two-part encoding) (e.g., 1-bit indicator for whether to apply the specified/configured beam reporting method). Specifically, the 1-bit indicator for whether to apply the specified/configured beam reporting method may be included in part-I of CSI.

In the above methods, the relationship between the Set A and the Set B may be specified/configured by a specific rule/formula. For example, it may be assumed that the Set A and the Set B are generated from the same antenna ports/elements through the same beam/precoder generation rule (e.g., a beam set is generated by a DFT matrix product). In this instance, a relationship in which the Set B is included in the Set A may be defined by making a difference in an oversampling factor between the Set A and the Set B. For example, the oversampling factor of the Set A may be 4, and the oversampling factor of the Set B may be 1.

In the embodiments described above, a reference time for the determination of the Set A and/or reported beam and predicted RSRP/SINR may be based on i) a Set B measurement time (e.g., a time based on existing CSI reference resources) or ii) a future time.

For example, embodiments of the present disclosure may be applied together with beam prediction for the future time. In this case, information reported based on embodiments of the present disclosure (e.g., configuration/property information of the Set A and beam information of the Set A) may be configuration/setting information of the Set A and beam information of the Set A for the future time. The future time may be based on time after time of the CSI-RS reference resource or a reporting time.

Although the proposed techniques of the present disclosure have been described based on AI/ML on the UE side, this does not mean that the techniques of the present disclosure can be applied only in the AI/ML implementation environment of the UE. The proposed techniques of the present disclosure can be applied in the AI/ML implementation environment on the base station/NW side or in a non-AI/ML environment, etc. In addition, the proposed techniques of the present disclosure can be applied to sidelink communication. Specifically, in the proposed techniques of the present disclosure, the base station/NW can be changed to another UE and applied.

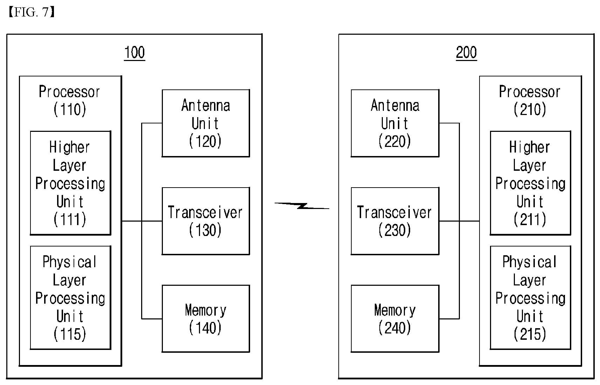

From an implementation perspective, the operations of the base station/UE according to the above-described embodiments (e.g., operations based on at least one of the methods 1 and 1-1, the approaches 1 to 3, the method 2, or the methods A to D) may be processed by a device of FIG. 7 described below (e.g., processors 110 and 210 of FIG. 7).

The operations of the base station/UE according to the above-described embodiments (e.g., operations based on at least one of the methods 1 and 1-1, the approaches 1 to 3, the method 2, or the methods A to D) may be stored in a memory (e.g., memories 140 and 240 of FIG. 7) in the form of a command/program (e.g., instructions, executable codes) for running at least one processor (e.g., processors 110 and 210 of FIG. 7).

A signaling procedure based on the above-described embodiments is described in detail below with reference to FIG. 4.

FIG. 4 illustrates a signaling procedure according to an embodiment of the present disclosure.

More specifically, FIG. 4 illustrates an example of signaling between a user equipment (UE) and a network (NW) based on the above-described proposed method (e.g., at least one of methods 1 and 1-1, approaches 1 to 3), method 2, or methods A to D). The UE/NW is merely an example and can be replaced with various devices as described above. FIG. 4 is only for convenience of explanation and does not limit the scope of the present disclosure. In addition, some step(s) illustrated in FIG. 4 may be omitted depending on the situation and/or setting. In FIG. 4, the NW may correspond to any entity, such as a base station (BS), node B, or TRP belonging to the network.

A UE may report UE capability information to an NW, in S405. The UE capability information may include information related to a UE AI/ML model (training/inference), and report information on whether beam prediction is possible.

The UE may receive configuration related to Set B beams and Set A (candidate) beams from the NW, in S410. The configuration may include ID information for the beams, a transmission period, time/frequency location information, sequence information, information on a relation between RSs (e.g., whether QCL is present), beam angle information, and information related to a beam width.

After the beam related configuration in S410, a base station may transmit beam RSs belonging to the Set B to the UE, and the UE may perform a measurement for the beam RSs, in S415.

The UE that performs the above beam-related configuration (S410) information and measurement (S415) for the Set B beams may determine configuration/property of preferred Set A based on the corresponding configuration and measurement values. The AI/ML of the UE may be utilized/applied in this process, in S420.

Subsequently, the UE may transmit information for the configuration/property of the selected Set A to the NW, in S425.

Subsequent to the step S425, the UE may additionally perform a beam reporting for the Set A. Or, the beam reporting procedure may be included in the step S425.

As mentioned above, the NW/UE signaling and operation described above may be implemented by devices 100 and 200 of FIG. 7. For example, the NW may correspond to a first device 100, and the UE may correspond to a second device 200. In some cases, the reverse case may also be considered.

For example, the NW/UE signaling and operation described above may be processed by at least one processor (110 and 210) of FIG. 7. The NW/UE signaling and operation described above may be stored in a memory (e.g., memories 140 and 240 of FIG. 7) in the form of a command/program (e.g., instructions, executable codes) for running at least one processor (110 and 210).

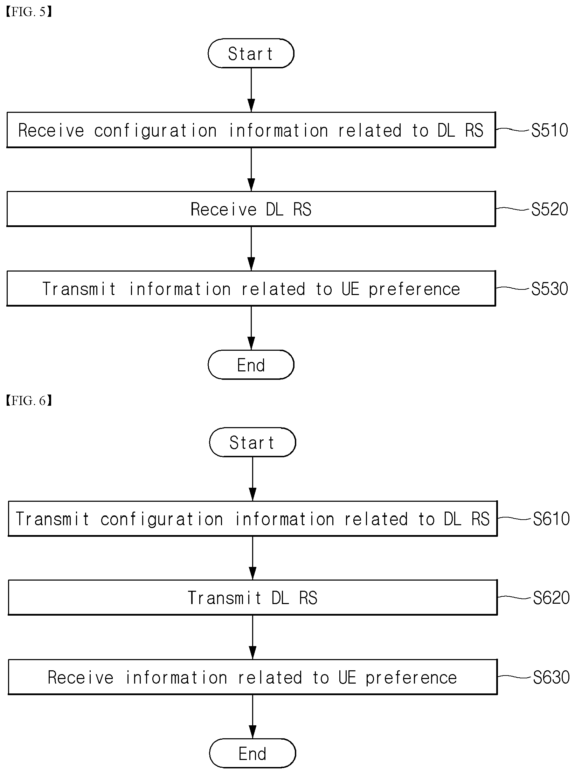

Below, the above-described embodiments are described in detail from a perspective of an operation of a UE and a base station with reference to FIGS. 5 and 6. Methods described below are merely distinguished for convenience of explanation. Thus, as long as the methods are not mutually exclusive, it is obvious that partial configuration of any method can be substituted or combined with partial configuration of another method.

FIG. 5 is a flow chart illustrating a method performed by a user equipment according to an embodiment of the present disclosure.

Referring to FIG. 5, a method performed by a user equipment in a wireless communication system according to an embodiment of the present disclosure includes a step S510 of receiving configuration information, a step S520 of receiving a downlink reference signal (DL RS), and a step S530 of transmitting information related to a UE preference.

In the step S510, the UE receives configuration information including information related to at least one downlink reference signal (DL RS) from a base station. The configuration information may include information based on the method 1 and/or the method 2 described above.

According to an embodiment, the configuration information may include information related to at least one of i) first DL RSs related to beams of a first set and/or ii) second DL RSs related to (candidate) beams of a second set.

Specifically, the configuration information may include at least one of the following 1) to 9).
1) ID information for beams (e.g., information including at least one of IDs of the first DL RSs related to the beams of the first set and/or IDs of the second DL RSs related to the (candidate) beams of the second set)
2) Transmission periodicity and time/frequency location information of DL RS(s) (e.g., first DL RS(s) and/or second DL RS(s))
3) Sequence information related to DL RS(s) (e.g., first DL RS(s) and/or second DL RS(s))
3) Information on a relation between RSs (e.g., QCL information (QCL type-D) configured between first DL RS(s) and second DL RS(s) or QCL information (QCL type-D) configured between antenna port(s) of first DL RS(s) and antenna port(s) of second DL RS(s))
4) Beam angle information (e.g., absolute/relative information, boresight direction, boresight angle (azimuth/zenith) of beams related to a first set and/or a second set)
5) Beam width information (e.g., 3dB beam width)
6) Master set including the candidate beams of the second set
7) Candidates for configuration related to the second set (e.g., candidates based on a different number of beams)
8) Candidates for properties related to the second set (e.g., candidates based on a range of different beam angles)
9) Relationship between the beams of the first set and the candidate beams that can be included in the second set

For example, the configuration information may include information related to the relationship between the beams of the first set and the candidate beams that can be included in the second set. The candidate beams of the second set may be defined/configured in the form of linear combination based on one or more beams of the beams of the first set. The configuration information may include information on coefficient(s) (e.g., αᵢⱼ values and βᵢⱼ values described above) related to the linear combination.

According to an embodiment, the configuration information may be based on configuration information related to channel state information (CSI).

The configuration information may include at least one of i) CSI-interference management (IM) resource related information, ii) CSI measurement configuration related information, iii) CSI resource configuration related information, iv) CSI-RS resource related information, or v) CSI report configuration related information. For example, at least one of the i) to v) may include information for at least one of the 1) to 9). For example, the CSI resource configuration related information (e.g., CSI-ResourceConfig IE of Table 1) may include ID information for the beams.

The first set may be based on Set B of Table 5 above, and the second set may be based on Set A of Table 5 above.

In the present disclosure, the "second set" may refer to a second set including candidate beams or a second set determined based on configuration/property preferred by the UE (configuration/property reported by the UE).

For example, the second DL RSs related to the (candidate) beams of the second set may include the first DL RSs. That is, the first DL RSs may be based on a subset of the second DL RSs (Alt.1 of Table 5 above).

For example, the second DL RSs related to the (candidate) beams of the second set may be different from the first DL RSs. The beams of the first set may be different from the (candidate) beams of the second set. The first DL RSs and the second DL RSs may be based on different beams (Alt.2 of Table 5 above).

According to an embodiment, a quasi co-location (QCL) relationship may be configured between the first DL RSs and the second DL RSs. The QCL relationship may be configured by qcl-Type.

For example, the antenna ports of the first DL RSs may be QCLed (quasi co-located) with the second DL RSs with respect to the qcl-Type. For example, the antenna ports of the second DL RSs may be QCLed with the first DL RSs with respect to the qcl-Type.

The qcl-Type may be configured as TypeD (Spatial Rx parameter).

Information related to the QCL relationship may be included in the configuration information related to the CSI (e.g., the information on the relation between the RSs). For example, the information related to the QCL relationship may include QCL information related to the respective first DL RSs. The QCL information related to the respective first DL RSs may include ID of at least one second DL RS. The QCL information related to the respective first DL RSs may further include information on the qcl-Type (if the qcl-Type is configured for each first DL RS).

In the step S520, the UE receives at least one DL RS from the base station.

The at least one DL RS may be based on synchronization signal/physical broadcast channel block (SS/PBCH block) (SSB) and/or channel state information-reference signal (CSI-RS).

According to an embodiment, the at least one DL RS may be based on a plurality of DL RSs related to at least one of i) the beams of the first set and/or ii) the (candidate) beams of the second set related to the first set.

The plurality of DL RSs may include at least one of i) the first DL RSs related to the beams of the first set and/or ii) the second DL RSs related to the (candidate) beams of the second set.

In the step S530, the UE transmits information related to a UE preference determined based on a measurement for the at least one DL RS.

In the present disclosure, the "information related to the UE preference" is merely an example of a term used to call information reported based on the method 1 and/or the method 2 (e.g., information related to configuration/property of Set A), and is not intended to limit the technical scope based on embodiments of the present disclosure to the term. Specifically, in terms of meaning information determined/selected/recommended/reported by the UE in relation to the determination of configuration/property of the second set, the following terms may be used.

For example, the information reported based on the method 1 and/or the method 2 may be referred to as "information determined based on a measurement for the at least one DL RS."

For example, the information reported based on the method 1 and/or the method 2 may be referred to as "UE recommended information."

For example, the information reported based on the method 1 and/or the method 2 may be referred to as "UE selected information."

For example, the information reported based on the method 1 and/or the method 2 may be referred to as "UE reported information."

A term of the "information related to the UE preference" may be replaced by one of terms based on the above-described examples.

According to an embodiment, the information related to the UE preference may be related to at least one of i) configuration of the second set and/or ii) property related to a beam of the second set. This embodiment may be based on the method 1. The information related to the UE preference may be information reported based on one of the approaches 1) to 3).

For example, (in the approach 1) or the approach 2)) the information related to the UE preference may include information on the configuration and/or the property (e.g., information representing at least one of candidate values of configuration and/or property related to the second set, information representing at least one of the candidates of the second set, etc.).

For example, (in the approach 3)) the information related to the UE preference may include information for implicitly reporting the information on the configuration and/or the property (e.g., at least one of the first DL RSs related to the beams of the first set).

According to an embodiment, the configuration of the second set may be related to at least one of i) beams determined among candidate beams (e.g., candidate beams of the master set) and/or ii) the number of the beams in the second set.

According to an embodiment, the property related to the beam of the second set may be related to at least one of a beam direction, an angle related to a beam, a beam width, and/or a range of the angle related to a beam.

According to an embodiment, the information related to the UE preference may be transmitted by being included in channel state information (CSI). This embodiment may be based on the approaches 1) to 3).

According to the approach 1), the information related to the UE preference may be reported by being included in CSI together with information related to the beam of the second set.

Specifically, the CSI may include information for at least one of i) at least one second DL RS of the second DL RSs related to the beam of the second set and/or ii) a beam quality value related to the at least one second DL RS.

According to the approach 3), the information related to the UE preference may be information for implicitly reporting the configuration/property of the second set (e.g., information related to a beam of the first set).

Specifically, the CSI may include information for at least one of i) at least one of the first DL RSs related to the beam of the first set and/or ii) a beam quality value related to the at least one first DL RS. The information related to the UE preference may be information for the at least one first DL RS. Based on the at least one first DL RS, i) the configuration of the second set and/or ii) the property related to a beam of the second set may be determined.

According to an embodiment, the information related to the UE preference may be transmitted based on an event. This embodiment may be based on the approach 2).

A report based on the event may be performed as follows. For example, based on pre-transmitted information related to the UE preference being different from the information related to the UE preference, the information related to the UE preference may be transmitted. For example, based on a beam quality value of a pre-reported DL RS via CSI (e.g., the second DL RSs related to the beams of the second set) being less than or equal to a certain value, the information related to the UE preference may be transmitted.

According to an embodiment, the second set for a report of CSI may be determined based on the information related to the UE preference.

The above method may further include a step of transmitting the CSI. In the step, the UE transmits the CSI to the base station.

Parameter(s) included in the CSI may be determined/calculated based on the measurement for the at least one DL RS. The parameter(s) included in the CSI may be parameter(s) based on 'reportquantity'.

For example, the 'reportquantity' may be set to cri-RI-PMI-CQI, cri-RI-i1, cri-RI-i1-CQI, cri-RI-CQI, cri-RSRP, ssb-Index-RSRP, or cri-RI-LI-PMI-CQI.

Based on the 'reportquantity', the CSI may include at least one of a channel quality indicator (CQI), a precoding matrix indicator (PMI), a CSI-RS Resource Indicator (CRI), an SSB Resource block Indicator (SSBRI), a layer indicator (LI), a rank indicator (RI), a Layer 1-reference signal received power (L1-RSRP), or a Layer 1-signal to noise and interference ratio (L1-SINR).

The CSI may be reported periodically, semi-persistently or aperiodically.

The CSI may be transmitted on a physical uplink control channel (PUCCH) or a physical uplink shared channel (PUSCH).

The periodic CSI reporting is performed on a short PUCCH or a long PUCCH. The semi-persistent (SP) CSI reporting is performed on the short PUCCH, the long PUCCH, or the PUSCH. The aperiodic CSI reporting is performed on the PUSCH and is triggered by DCI. In this case, information related to a trigger of the aperiodic CSI reporting may be transmitted/indicated/configured via MAC-CE.

The CSI may include information related to the beam(s) of the second set estimated/determined based on an AI/ML model of the UE. For example, an input of the AI/ML model may be information based on the measurement for the at least one DL RS (e.g., L1-RSRP(s) related to the beams of the first set and/or L1-SINR(s) related to the beams of the first set). An output of the AI/ML model may be information related to the beam(s) of the second set (e.g., RS ID(s) related to the beam(s) of the second set, RSRP(s) related to the beam(s) of the second set, and/or SINR(s) related to the beam(s) of the second set).

According to an embodiment, the CSI may include information for at least one of i) at least one second DL RS of second DL RSs related to beams of the determined second set and/or ii) a beam quality value related to the at least one second DL RS. In this instance, (a size of) the second set used to report the CSI may vary. Hence, an UCI payload (i.e., the number of bits) based on the CSI may not satisfy an UCI payload limit (e.g., max UCI payload size). In particular, if the CSI is reported periodically or semi-persistently, the problem described above may occur. To solve the problem, embodiments based on the methods A to D may be considered. This is described in detail below.

According to an embodiment, a size of the second set for the report of the CSI may be determined based on a max payload size related to uplink control information (UCI) (method A).

According to an embodiment, based on an UCI payload size based on the CSI being greater than the max payload size related to the UCI, a part of the information for the at least one second DL RS and/or the information for the beam quality value related to the at least one second DL RS may be omitted from the CSI (method B). The max payload size related to the UCI may be determined based on a higher layer parameter 'maxPayloadSize'.

According to an embodiment, a physical uplink control channel (PUCCH) resource for transmission of the CSI may be determined based on the payload size of the CSI. The determined PUCCH resource may be one of PUCCH resources configured for each payload size (method C).

According to an embodiment, based on the UCI payload size based on the CSI being greater than the max payload size related to the UCI, a reduced second set (e.g., the above-described reduced Set A) in which at least one beam is excluded from beams of the determined second set may be generated (method D). The CSI may include information for at least one of i) one or more second DL RSs based on the reduced second set and/or ii) beam quality values related to the one or more second DL RSs.

The operation based on the above-described steps S510 to S530 and the CSI transmission step may be implemented by a device of FIG. 7. For example, a UE 200 may control one or more transceivers 230 and/or one or more memories 240 to perform the operation based on the steps S510 to S530.

Below, the above-described embodiments are described in detail from a perspective of base station operation.

Steps S610 to S630 and a CSI receiving step described below correspond to the steps S510 to S530 and the CSI transmission step described with reference to FIG. 5. Considering the above correspondence, redundant description is omitted. That is, the detailed description of the base station operation described below can be replaced with the description/embodiment of FIG. 5 corresponding to the base station operation. For example, the description/embodiment of the steps S510 to S530 in FIG. 5 may be additionally applied to the base station operation of the steps S610 to S630 described below. For example, the description/embodiment of the above-described CSI transmission step may be additionally applied to the base station operation of the CSI receiving step described below.

FIG. 6 is a flow chart illustrating a method performed by a base station according to another embodiment of the present disclosure.

Referring to FIG. 6, a method performed by a base station in a wireless communication system according to another embodiment of the present disclosure includes a step S610 of transmitting configuration information, a step S620 of transmitting a downlink reference signal (DL RS), and a step S630 of receiving information related to a UE preference.

In the step S610, the base station transmits, to a UE, configuration information including information related to at least one downlink reference signal (DL RS).

In the step S620, the base station transmits the at least one DL RS to the UE.

In the step S630, the base station receives, from the UE, information related to a UE preference determined based on a measurement for the at least one DL RS.

The method may further include a step of receiving the CSI. In the step, the base station may receive the CSI from the UE.

The operation based on the above-described steps S610 to S630 and the CSI receiving step may be implemented by a device of FIG. 7. For example, a base station 100 may control one or more transceivers 130 and/or one or more memories 140 to perform the operation based on the steps S610 to S630 and the CSI receiving step.

A device to which an embodiment of the present disclosure is applicable (a device implementing the method/operation according to an embodiment of the present disclosure) is described below with reference to FIG. 7.

FIG. 7 illustrates configuration of a first device and a second device according to an embodiment of the present disclosure.

A first device 100 may include a processor 110, an antenna unit 120, a transceiver 130, and a memory 140.

The processor 110 may perform baseband-related signal processing and include a higher layer processing unit 111 and a physical layer processing unit 115. The higher layer processing unit 111 may process operations of the MAC layer, the RRC layer, or higher layers. The physical layer processing unit 115 may process the operation of the PHY layer. For example, if the first device 100 is a base station (BS) device in BS-UE communication, the physical layer processing unit 115 may perform uplink reception signal processing, downlink transmission signal processing, and the like. For example, if the first device 100 is a first UE device in inter-UE communication, the physical layer processing unit 115 may performs downlink reception signal processing, uplink transmission signal processing, sidelink transmission signal processing, and the like. The processor 110 may control the overall operation of the first device 100 in addition to performing the baseband-related signal processing.

The antenna unit 120 may include one or more physical antennas and support MIMO transmission/reception if the antenna unit 120 includes a plurality of antennas. The transceiver 130 may include a radio frequency (RF) transmitter and an RF receiver. The memory 140 may store information processed by the processor 110 and software, operating systems, and applications related to the operation of the first device 100. The memory 140 may also include components such as a buffer.

The processor 110 of the first device 100 may be configured to implement the operation of the BS in the BS-UE communication (or the operation of the first UE device in the inter-UE communication) in embodiments described in the present disclosure.

The second device 200 may include a processor 210, an antenna unit 220, a transceiver 230, and a memory 240.

The processor 210 may perform baseband-related signal processing and include a higher layer processing unit 211 and a physical layer processing unit 215. The higher layer processing unit 211 may process the operation of the MAC layer, the RRC layer, or higher layers. The physical layer processing unit 215 may process the operation of the PHY layer. For example, if the second device 200 is a UE device in BS-UE communication, the physical layer processing unit 215 may perform downlink reception signal processing, uplink transmission signal processing, and the like. For example, if the second device 200 is a second UE device in inter-UE communication, the physical layer processing unit 215 may perform downlink reception signal processing, uplink transmission signal processing, sidelink reception signal processing, and the like. The processor 210 may control the overall operation of the second device 210 in addition to performing the baseband-related signal processing.

The antenna unit 220 may include one or more physical antennas and support MIMO transmission/reception if the antenna unit 220 includes a plurality of antennas. The transceiver 230 may include an RF transmitter and an RF receiver. The memory 240 may store information processed by the processor 210 and software, operating systems, and applications related to the operation of the second device 200. The memory 240 may also include components such as a buffer.

The processor 210 of the second device 200 may be configured to implement the operation of the UE in the BS-UE communication (or the operation of the second UE device in the inter-UE communication) in embodiments described in the present disclosure.

The descriptions for the BS and the UE in the BS-UE communication (or the first UE device and the second UE device in the inter-UE communication) in the examples of the present disclosure can be equally applied to the operations of the first device 100 and the second device 200, and redundant descriptions are omitted.

The wireless communication technology implemented in the devices 100 and 200 according to the present disclosure may further include narrowband Internet of Things (NB-IoT) for low-power communication in addition to LTE, NR, and 6G. For example, the NB-IoT technology may be an example of a low power wide area network (LPWAN) technology and may be implemented in standards such as LTE Cat NB1 and/or LTE Cat NB2. The NB-IoT technology is not limited to the above-described names.

Additionally or alternatively, the wireless communication technology implemented in the devices 100 and 200 according to the present disclosure may perform communication based on LTE-M technology. For example, the LTE-M technology may be an example of the LPWAN technology, and may be called by various names such as enhanced machine type communication (eMTC). For example, the LTE-M technology may be implemented with at least one of various standards such as 1) LTE CAT 0, 2) LTE Cat M1, 3) LTE Cat M2, 4) LTE non-BL (non-Bandwidth Limited), 5) LTE-MTC, 6) LTE machine type communication, and/or 7) LTE M. The LTE-M technology is not limited to the above-mentioned names.

Additionally or alternatively, the wireless communication technology implemented in the devices 100 and 200 according to the present disclosure may include at least one of ZigBee, Bluetooth, and low power wide area network (LPWAN) in consideration of low power communication, and is not limited to the above-mentioned names. For example, the ZigBee technology may create personal area networks (PAN) related to small/low-power digital communication based on various standards such as IEEE 802.15.4, and may be called by various names.

## Claims

1. A method performed by a user equipment (UE) in a wireless communication system, the method comprising:
receiving configuration information including information related to at least one downlink reference signal (DL RS);
receiving the at least one DL RS; and
transmitting information related to a UE preference determined based on a measurement for the at least one DL RS,
wherein the at least one DL RS is based on a plurality of DL RSs related to at least one of i) beams of a first set and/or ii) beams of a second set related to the first set, and
wherein the information related to the UE preference is related to at least one of i) a configuration of the second set and/or ii) a property related to a beam of the second set.

2. The method of claim 1, wherein the plurality of DL RSs include at least one of i) first DL RSs related to the beams of the first set and/or ii) second DL RSs related to the beams of the second set.

3. The method of claim 2, wherein the second DL RSs include the first DL RSs.

4. The method of claim 2, wherein the second DL RSs are different from the first DL RSs.

5. The method of claim 4, wherein a quasi co-location (QCL) relationship is configured between the second DL RSs and the first DL RSs.

6. The method of claim 1, wherein the configuration of the second set is related to at least one of i) beams determined among pre-configured candidate beams and/or ii) a number of beams in the second set.

7. The method of claim 1, wherein the property related to the beam of the second set is related to at least one of a beam direction, an angle related to a beam, a beam width, and/or a range of the angle related to a beam.

8. The method of claim 1, wherein the information related to the UE preference is transmitted by being included in channel state information (CSI).

9. The method of claim 8, wherein the CSI includes information for at least one of i) at least one second DL RS of second DL RSs related to the beams of the second set and/or ii) a beam quality value related to the at least one second DL RS.

10. The method of claim 8, wherein the CSI includes information for at least one of i) at least one first DL RS of first DL RSs related to the beams of the first set and/or ii) a beam quality value related to the at least one first DL RS,
wherein the information related to the UE preference is information for the at least one first DL RS, and
wherein based on the at least one first DL RS, i) the configuration of the second set and/or ii) the property related to the beam of the second set is/are determined.

11. The method of claim 1, wherein the information related to the UE preference is transmitted based on an event.

12. The method of claim 11, wherein based on pre-transmitted information related to the UE preference being different from the information related to the UE preference, the information related to the UE preference is transmitted.

13. The method of claim 11, wherein based on a beam quality value of a pre-reported DL RS via channel state information (CSI) being less than or equal to a certain value, the information related to the UE preference is transmitted.

14. The method of claim 1, wherein a second set for a report of channel state information (CSI) is determined based on the information related to the UE preference.

15. The method of claim 14, further comprising transmitting the CSI,
wherein the CSI includes information for at least one of i) at least one second DL RS of second DL RSs related to beams of the determined second set and/or ii) a beam quality value related to the at least one second DL RS.

16. The method of claim 15, wherein a size of the second set for the report of the CSI is determined based on a max payload size related to uplink control information (UCI).

17. The method of claim 15, wherein based on an uplink control information (UCI) payload size based on the CSI being greater than a max payload size related to UCI:
a part of the information for the at least one second DL RS and/or the information for the beam quality value related to the at least one second DL RS is omitted from the CSI.

18. The method of claim 15, wherein a physical uplink control channel (PUCCH) resource for transmission of the CSI is determined based on a payload size of the CSI, and
wherein the determined PUCCH resource is one of PUCCH resources configured for each payload size.

19. The method of claim 15, wherein based on an uplink control information (UCI) payload size based on the CSI being greater than a max payload size related to UCI:
a reduced second set, in which at least one beam is excluded from the beams of the determined second set, is generated, and
wherein the CSI includes information for at least one of i) one or more second DL RSs based on the reduced second set and/or ii) beam quality values related to the one or more second DL RSs.

20. The method of claim 1, wherein the configuration information includes information related to a relationship between the beams of the first set and candidate beams that are able to be included in the second set.

21. A user equipment (UE) operating in a wireless communication system, the user equipment comprising:
one or more transceivers;
one or more processors; and
one or more memories operably connectable to the one or more processors and storing instructions that configure the one or more processors to perform operations based on being executed by the one or more processors,
wherein the operations comprise:
receiving configuration information including information related to at least one downlink reference signal (DL RS); receiving the at least one DL RS; and
transmitting information related to a UE preference determined based on a measurement for the at least one DL RS,
wherein the at least one DL RS is based on a plurality of DL RSs related to at least one of i) beams of a first set and/or ii) beams of a second set related to the first set, and
wherein the information related to the UE preference is related to at least one of i) a configuration of the second set and/or ii) a property related to a beam of the second set.

22. A device comprising:
one or more memories; and
one or more processors operably connected to the one or more memories,
wherein the one or more memories include instructions that configure the one or more processors to perform operations based on being executed by the one or more processors,
wherein the operations comprise:
receiving configuration information including information related to at least one downlink reference signal (DL RS);
receiving the at least one DL RS; and
transmitting information related to a user equipment (UE) preference determined based on a measurement for the at least one DL RS,
wherein the at least one DL RS is based on a plurality of DL RSs related to at least one of i) beams of a first set and/or ii) beams of a second set related to the first set, and
wherein the information related to the UE preference is related to at least one of i) a configuration of the second set and/or ii) a property related to a beam of the second set.

23. One or more non-transitory computer readable mediums storing one or more instructions,
wherein the one or more instructions executable by one or more processors configure the one or more processors to perform operations,
wherein the operations comprise:
receiving configuration information including information related to at least one downlink reference signal (DL RS);
receiving the at least one DL RS; and
transmitting information related to a user equipment (UE) preference determined based on a measurement for the at least one DL RS,
wherein the at least one DL RS is based on a plurality of DL RSs related to at least one of i) beams of a first set and/or ii) beams of a second set related to the first set, and
wherein the information related to the UE preference is related to at least one of i) a configuration of the second set and/or ii) a property related to a beam of the second set.

24. A method performed by a base station in a wireless communication system, the method comprising:
transmitting configuration information including information related to at least one downlink reference signal (DL RS);
transmitting the at least one DL RS; and
receiving information related to a user equipment (UE) preference determined based on a measurement for the at least one DL RS,
wherein the at least one DL RS is based on a plurality of DL RSs related to at least one of i) beams of a first set and/or ii) beams of a second set related to the first set, and
wherein the information related to the UE preference is related to at least one of i) a configuration of the second set and/or ii) a property related to a beam of the second set.

25. A base station operating in a wireless communication system, the base station comprising:
one or more transceivers;
one or more processors; and
one or more memories operably connectable to the one or more processors and storing instructions that configure the one or more processors to perform operations based on being executed by the one or more processors,
wherein the operations comprise:
transmitting configuration information including information related to at least one downlink reference signal (DL RS);
transmitting the at least one DL RS; and
receiving information related to a user equipment (UE) preference determined based on a measurement for the at least one DL RS,
wherein the at least one DL RS is based on a plurality of DL RSs related to at least one of i) beams of a first set and/or ii) beams of a second set related to the first set, and
wherein the information related to the UE preference is related to at least one of i) a configuration of the second set and/or ii) a property related to a beam of the second set.
